# EUROPEAN PATENT APPLICATION

(11) **EP 4 435 340 A1**
(43) Date of publication of application: **25.09.2024**
(21) Application number: 24164658.7
(22) Date of filing: 19.03.2024
(51) Int. Cl.: F24F 11/63, G05B 17/00, G06F 30/27, F24F 130/10, F24F 140/60, G05B 13/02, G06F 119/08

(54) **MODELING TEMPERATURE REGULATION SYSTEMS**

(30) Priority: 20.03.2023 US 202363453415 P
(71) Applicant: Delaware Capital Formation, Inc., Wilmington, Delaware 19809 (US)
(72) Inventor: DEV, Bodhayan, Watertown, 02472 (US); SWAROOP, Prem, Watertown, 02472 (US)
(74) Representative: Fish & Richardson P.C.

(57) **Abstract**

A process includes obtaining a target thermal load profile and a target location; determining weather conditions associated with the target location; simulating regulation of the target thermal load profile by different temperature regulation systems having different corresponding sets of components, subject to the weather conditions, to obtain energy consumption data for each of the different temperature regulation systems; and providing at least one of the different temperature regulation systems based on the energy consumption data, to cause use of the at least one of the different temperature regulation systems having the corresponding set of components.

## Description

### FIELD OF THE DISCLOSURE

This disclosure relates to temperature regulation systems, such as industrial refrigeration units.

### BACKGROUND

Various approaches have been employed for controlling air conditioning and refrigeration systems, e.g., using a neural network. For example, U.S. Patent No. 7,814,758 describes determining a desired rate of change of a refrigeration system operating parameter, using historical data to predict an expected rate of change of the operating parameter for cycling each component, calculating an appropriateness factor for each component corresponding to a difference between the expected rate of change for the component and the desired rate of change, ranking the components based on the appropriateness factor, and selectively cycling at least one component based on the ranking.

### SUMMARY

Some aspects of this disclosure describe a system that includes one or more processors; and one or more computer-readable mediums encoding instructions that, when executed by the one or more processors, cause the one or more processors to: obtain a target thermal load profile and a target location; determine weather conditions associated with the target location; simulate regulation of the target thermal load profile by different temperature regulation systems having different corresponding sets of components, subject to the weather conditions, to obtain energy consumption data for each of the different temperature regulation systems; and provide at least one of the different temperature regulation systems based on the energy consumption data, to cause use of the at least one of the different temperature regulation systems having the corresponding set of components.

This and other described systems and methods can have one or more of at least the following characteristics.

In some implementations, simulating the regulation of the target thermal load profile includes processing the target thermal load profile using a machine learning model that has been trained to output the energy consumption data for each of the different temperature regulation systems.

In some implementations, the machine learning model has been trained using, as training data, outputs of physics-based thermodynamic simulations.

In some implementations, the machine learning model includes a surrogate model or a reduced-order model that embeds the outputs of the physics-based thermodynamic simulations.

In some implementations, the machine learning model has been trained to learn a transfer function between mass flow-rate for components of the temperature regulation systems and a set of input conditions.

In some implementations, the machine learning model has been trained using: as input data, data indicative of the different temperature regulation systems, and as labels of the input data, historical energy consumption data.

In some implementations, the instructions cause the one or more processors to: obtain measured energy consumption data for regulation of the target thermal load profile by one of the at least one of the different temperature regulation systems, and retrain the machine learning model using the measured energy consumption data.

In some implementations, the historical energy consumption data is measured at a facility having the target thermal load profile.

In some implementations, the corresponding sets of components include at least one of compressors, condensers, or refrigerants.

In some implementations, the energy consumption data includes an amount of energy consumption as a function of different refrigerants.

In some implementations, the instructions cause the one or more processors to simulate regulation of the target thermal load profile as a function of time over multiple different times within a day.

In some implementations, the different temperature regulation systems have different arrangements of the corresponding sets of components, and the instructions cause the one or more processors to provide the at least one of the different temperature regulation systems by causing the one or more processors to provide a particular arrangement of the different arrangements.

In some implementations, the different arrangements include at least one of a series arrangement of compressors or a parallel arrangement of compressors.

In some implementations, the target thermal load profile includes a facility cooling profile.

In some implementations, the instructions cause the one or more processors to obtain the target thermal load profile by determining the target thermal load profile based on one or more parameters associated with the target location. The one or more parameters include at least one of demographic data of the target location or data characterizing a facility at the target location.

In some implementations, the instructions cause the one or more processors to provide the at least one of the different temperature regulation systems by: determining a simulated cost associated with each of the different temperature regulation systems, based on the energy consumption data; and selecting the at least one of the different temperature regulation systems as a subset of the different temperature regulation systems having the lowest costs among the simulated costs.

In some implementations, the instructions cause the one or more processors to determine the corresponding sets of components based on the target thermal load profile.

In some implementations, obtaining the target thermal load includes: obtaining demographic information for the target location; determining a customer base for a facility in which the target thermal load is to be regulated, based on the demographic information and facility information characterizing the facility; determining a peak population at the facility based on the customer base and the facility information; and determining the target thermal load based on the peak population and a size of the facility.

Some aspects of this disclosure describe a method that includes: obtaining a target thermal load profile and a target location of a facility; determining weather conditions associated with the target location; simulating regulation of the target thermal load profile by different temperature regulation systems having different corresponding sets of components, subject to the weather conditions, to obtain energy consumption data for each of the different temperature regulation systems; and installing a first temperature regulation system of the different temperature regulation systems at the facility based on the energy consumption data.

This and other methods described herein can have one or more of at least the following characteristics.

In some implementations, simulating the regulation of the target thermal load profile is performed using a trained machine learning model, and the trained machine learning model has been trained using, as training data, outputs of physics-based thermodynamic simulations, such that the simulation machine learning model embeds the thermodynamic simulations as a surrogate model or a reduced-order model.

In some implementations, the method includes obtaining measured energy consumption data for temperature regulation by the first temperature regulation systems at the facility; and retraining the trained machine learning model using the measured energy consumption data.

In some implementations, the method includes regulating temperatures at the facility using the installed first temperature regulation system.

In some implementations, the corresponding sets of components include at least one of compressors, condensers, or refrigerants.

In some implementations, the trained machine learning model has been trained using: as input data, data indicative of the different temperature regulation systems, and as labels of the input data, historical energy consumption data.

In some implementations, the trained machine learning model has been trained to learn a transfer function between mass flow-rate for components of the temperature regulation systems and a set of input conditions

The details of one or more implementations are set forth in the accompanying drawings and the description below. Other aspects, features and advantages will be apparent from the description and drawings, and from the claims.

### BRIEF DESCRIPTION OF THE DRAWINGS

FIG. 1 is a diagram showing an example of temperature regulation system modeling.
FIG. 2 is a diagram showing an example of a modeling system.
FIG. 3 is a diagram showing an example of a thermal load.
FIG. 4 is a diagram showing an example of a training system.
FIG. 5 is an example of a user interface.
FIG. 6 is an example of a user interface.
FIG. 7 is an example of predicted electrical power consumption.
FIG. 8 is a diagram showing an example of a thermal load determination process.

### DETAILED DESCRIPTION

This disclosure relates to simulations of thermal regulation by various different temperature regulation systems. For example, cloud-based and/or web-based applications and tools can simulate the operations of industrial refrigeration units applicable to supermarkets. The applications and tools can provide users with simulation outputs, such as annual energy consumption costs, as functions of temperature regulation system components such as operating fluids, compressors, condensers, etc. The applications and tools can incorporate a regulation-simulating machine learning model that embeds physics-based simulations in a computationally-efficient form that reduces the computational costs associated with modeling, such that otherwise-computationally-prohibitive modeling and testing can be carried out. Thus, the technical field of thermal regulation system design can be improved by the systems and techniques described in this application, enabling the design of a new thermal regulation system for a specific facility in much less time than was previously possible. Accordingly, users can rapidly determine and deploy optimized temperature regulation systems that are compatible with target operating regimes, obtaining efficient performance.

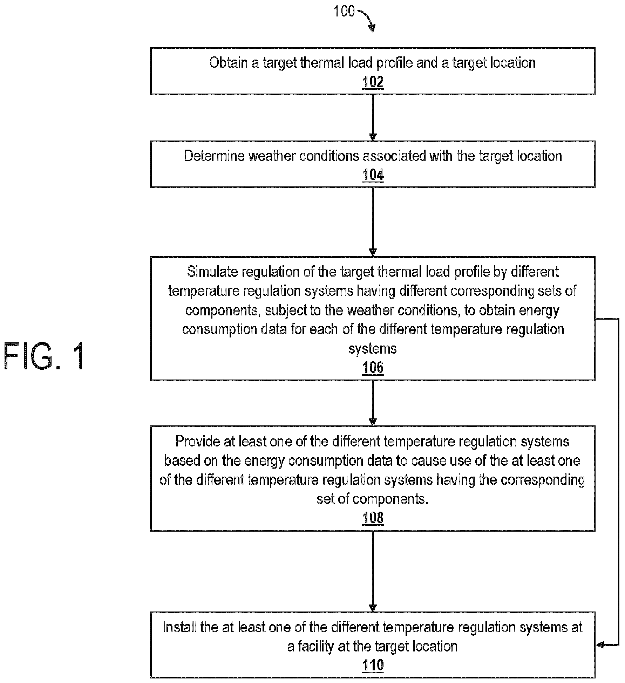

FIG. 1 shows an example of a process 100 according to some implementations of this disclosure. In some implementations, the process 100 can be performed by a computer system, such as a cloud computing system, a distributed computing system, or a local computing system.

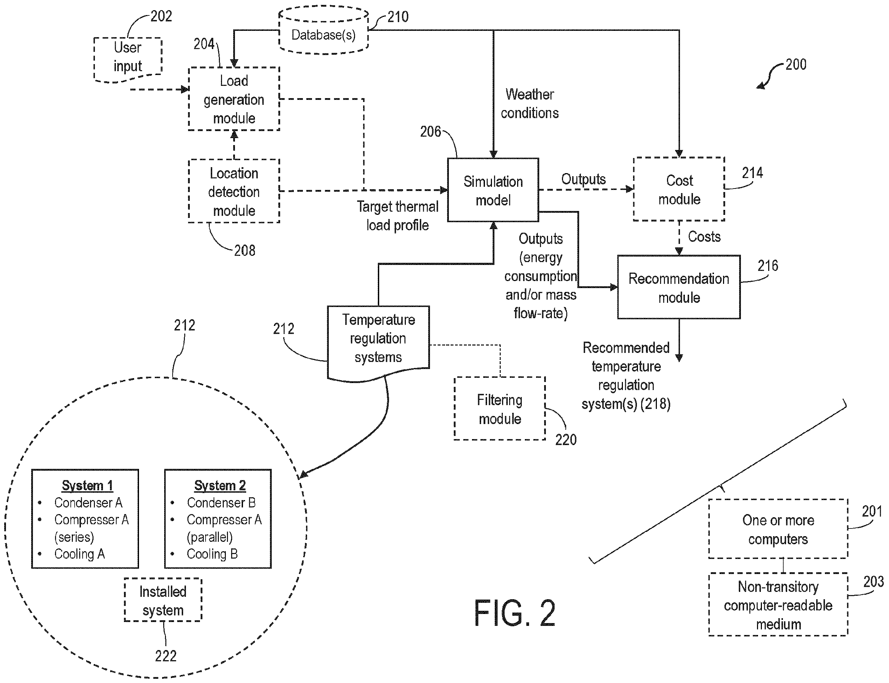

FIG. 2 shows an example of a system 200 associated with process 100. For example, elements of the system 200 can be configured to perform process 100. For example, the system 200 can include one or more computers 201 (e.g., a data processing apparatus) and a non-transitory computer-readable medium 203 tangibly encoding a computer program operable to cause the one or more computers 201 to perform process 100 and/or associated operations described herein. The one or more computers 201 and/or the non-transitory computer-readable medium 203 can implement at least some of the modules of FIG. 2. The system 200 can include computing components of cloud computing systems, computing components in local computing hardware, computing components in another type of computing environment, or a combination thereof.

As shown in FIG. 1, the process 100 includes obtaining a target thermal load profile and a target location (102). A target thermal load profile represents a time-dependent thermal load for regulating the temperature of a facility or portion of a facility, such as a building, portion of a building (e.g., a room or a refrigerated storage space), or a set of buildings. For example, the target thermal load profile can indicate an amount of cooling and/or heating to maintain the temperature of the facility or portion of the facility within a target temperature range (e.g., a room temperature range or a cold temperature range used for storage). Examples of facilities that may be thermally regulated include large retail locations (e.g., malls, department stores, hypermarkets, and big-box retailers), small retail locations (e.g., gas stations, car washes, and grocery stores), office buildings, laboratories, factories, hospitals and other medical facilities, congregation spaces (e.g., community centers, libraries, places of worship, and educational facilities), residential facilities (e.g., single-family homes, multi-unit buildings, dormitories, townhomes, motels/hotels, condos, and elder care facilities), and sets of buildings such as several buildings served by a common district heating system, and/or portions of any of these or other facility types.

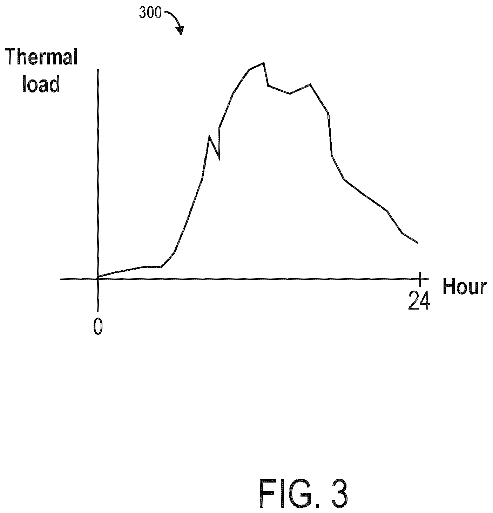

For example, FIG. 3 shows an example of a thermal load profile 300. As illustrated by the thermal load profile 300, over the course of a day (24 hours), the thermal load can change as a function of time. For example, the thermal load may be higher at mid-day than at night due to higher ambient temperatures, a higher number of customers in the facility, more portions of the facility requiring cooling (e.g., when refrigerated products are out for display), etc. In some implementations, the thermal load represented by the thermal load profile includes a thermal load to be removed from one or more evaporator cases of a temperature regulation system (e.g., an evaporator case of a temperature regulation system evaluated in the process 100, as discussed in further detail below).

The target location can be the location of the facility or portion of the facility having the target thermal load profile. For example, the target location can include a postal code (e.g., a Zone Improvement Plan (ZIP) code in the United States of America), a town, a city, a region, etc., in which the facility is located.

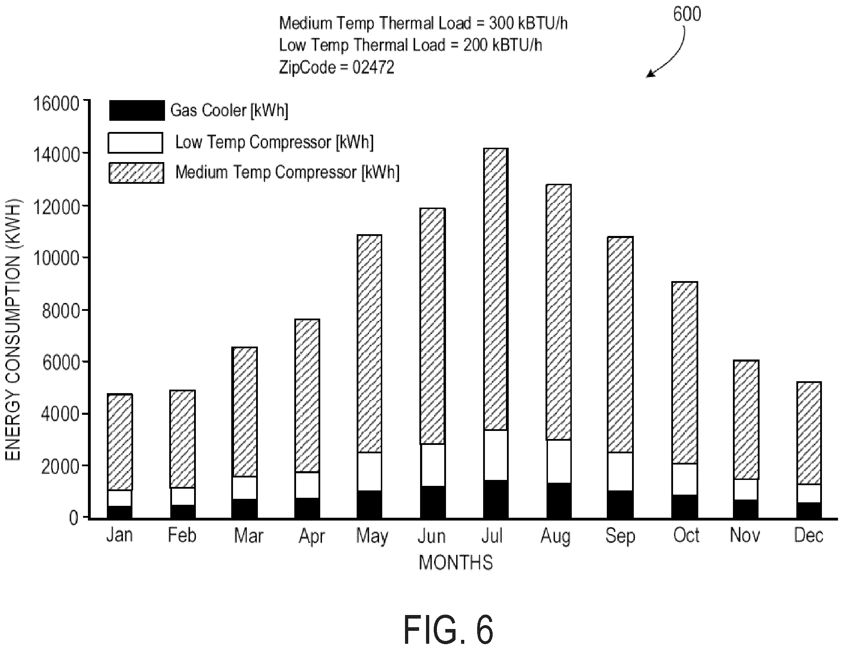

As shown in FIG. 2, one or both of the target thermal load profile and the target location can be provided as user input 202. For example, a user can provide one or both of the target thermal load profile and the target location into a user interface displayed on a user device such as a smartphone, computer, wearable device, tablet, etc., and the entered information can be transmitted from the user device to a computer system (e.g., cloud computing system) performing process 100. For example, the user interface can be a website interface or an application interface (e.g., of a mobile application), and the entered information can be transmitted over an Internet connection. It may be convenient for the user to enter a ZIP code into the user interface for simple and rapid location entry, as shown in FIG. 6.

In some implementations, one or both of the target thermal load profile and the target location can be determined automatically. In the case of the target location being determined automatically, in some implementations, a location detection module 208 detects a user's location, e.g., by detecting an Internet Protocol address (IP address) associated with the user device and correlating the IP address with a known location, and/or by accessing a stored location associated with the user's credentials in an application. The detected location can then be provided as the target location. In some implementations, in response to automatic location detection failing, a user is provided with a user interface element by which the user can enter the location.

In the case of the target thermal load profile being determined automatically, in some implementations, a load generation module 204 can obtain (e.g., as user input 202 and/or by accessing a database) information about the facility being thermally regulated, such as a size of the facility, a layout of the facility (e.g., dimensions and/or arrangements of rooms), a function of the facility, and/or any other type of data indicative of the facility's thermal regulation needs. For example, a larger facility may have a higher thermal load than a smaller facility, and a supermarket may have a higher thermal load than a consumer goods market due to additional required cooling for perishable items. In addition, in some implementations, the load generation module 204 accesses one or more databases 210 (e.g., based on a user-provided or detected location of the facility) to obtain external data such as census data for the target location, store (e.g., super-store) locations at the target location, foot-traffic at stores at the target location, mean household income at the target location, and/or historical data of thermal load profiles (e.g., thermal load profiles for facilities that are similar to the facility under study), to predict the target thermal load profile (which can be based on any one or more of these and/or other parameters). The databases 210 can be remote databases, e.g., databases included in one or more cloud computing systems and accessed through the Internet using one or more Application Programming Interfaces (API).

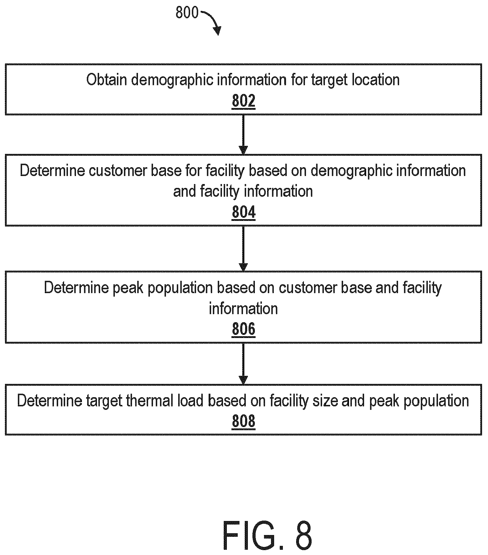

As shown in FIG. 8, in some implementations a process 800 can be performed to determine the target thermal load. The process 800 can be performed, for example, by the load generation module 204. The process 800 can be applied in cases in which the target thermal load is a target thermal load for a facility, such as a store.

The process 800 includes obtaining demographic information for the target location (802). For example, the demographic information can be obtained from a census database of the databases 210. The demographic information can include, for example, population, employment data (e.g., employed or unemployed, type of employment such as service, office, construction, etc., and/or remote work or in-person work), transportation data (e.g., commute method such as drive, carpool, walk, or mass transit), income level, and/or any of type of demographic information.

The process 800 further includes determining a customer base for the facility based on the demographic information and based on facility information (804). For example, people having certain characteristics (as indicated in the demographic information) may be more likely to visit a facility, corresponding to a higher estimated customer base. The facility information can include, for example, a type of the facility (e.g., grocery store or furniture retailer), a price-point of the facility (e.g., premium or discount), and/or any other suitable information characterizing the function and operation of the facility. Operation 804 can be performed, for example, based on a known relationship between the customer base and demographic information, given the facility information. For example, for a high-end grocery store, higher local income may be correlated with a higher customer base. As another example, for a coffee retailer, a higher number of local pedestrians may be correlated with a higher customer base.

The process 800 further includes determining a peak population at the facility based on the customer base and the facility information (806). The peak population may be generally correlated with the customer base, but the relationship may not be straightforward. For example, for a given customer base, an appliance retailer may have a significantly smaller peak population than a grocery store, corresponding to once-a-year visits by each customer compared to weekly visits. The specific facility information used for operation 806 may be the same as or different from the specific facility information used for operation 804. Operation 806 can be performed, for example, based on a known relationship between peak population and customer base, given the facility information.

A target thermal load is determined based on the peak population and based on a size of the facility (808). For example, operation 808 can assume an average thermal load dissipated by each customer at peak population, and determine the target thermal load based on regulating that thermal load in a small, medium, or large-volume facility. The target thermal load determined in operation 808 can be used as the target thermal load of process 100.

Referring again to FIGS. 1-2, the process 100 further includes determining weather conditions associated with the target location (104). The weather conditions will inform how the thermal load is regulated. For example, more cooling may be required in a warmer climate, and more heating may be required in a cooler climate. The weather conditions can include, for example, temperature data for the target location, e.g., average daily temperature and/or average temperatures at different times within a day. The temperature data can be time-dependent, for example, including historical data for temperatures on different days of the year in different seasons, etc. In some implementations, the weather conditions can be obtained from the databases 210, e.g., from the Automated Surface Observing System (ASOS). In some implementations, the temperature data can be predicted based on historical data for the target location. For example, the predicted temperature data can include a maximum predicted temperature, a minimum predicted temperature, and an average predicted temperature (each predicted as a function of time, e.g., for times within individual days, daily, weekly, or seasonally), and energy consumption can be predicted based on the predicted temperature data.

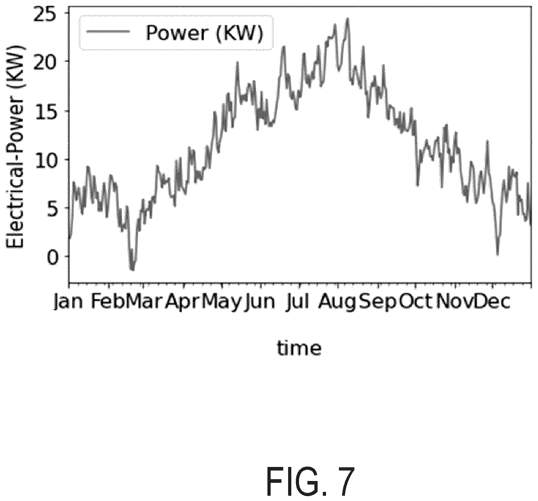

The process 100 further includes simulating regulation of the target thermal load profile by different temperature regulation systems having different corresponding sets of components, subject to the weather conditions (106). For example, as shown in FIG. 2, a simulation model 206 can simulate temperature regulation by temperature regulation systems 212, subject to the weather conditions. The temperature regulation systems 212 differ from one another in one or more aspects, and the simulation is performed in order to select, from among the temperature regulation systems 212, one or more temperature regulation systems that provide optimal performance or otherwise satisfy one or more conditions. FIG. 7 shows an example of predicted electrical power consumption as determined by a simulation model 206, as a function of time. Power consumption, corresponding to cooling, is higher during warmer times of the year.

The simulation provides, as output, energy consumption data for each of the different temperature regulation systems (106). For example, the energy consumption data can be obtained for each system 212 as a whole, and/or for individual component(s) of one or more of the systems 212 (e.g., energy consumption for a compressor in a system 212). Moreover, in some implementations, in addition to or instead of energy consumption data, the simulation provides, as output, mass flow-rate for the systems 212 and/or component(s) thereof.

The temperature regulation systems 212 can include different sets of component(s) (e.g., different models and/or types of compressor and/or condenser), can use different types of consumables (e.g., different operating fluid(s), such as refrigerants), and/or can have different arrangements of component(s) (e.g., a parallel arrangement of compressors, a series arrangement of compressors, or both series and parallel arrangements of compressors). The temperature regulation systems 212 can include, for example, refrigeration systems, various heating, ventilation, and air conditioning (HVAC) systems, heat pump systems, heating systems such as hydroponic and radiator systems, district heating systems, and/or other temperature regulation systems. In some implementations, the temperature regulation systems 212 include different cooling types/components. For example, the temperature regulation systems 212 can include air-cooling component(s), water-cooling component(s), and/or evaporative cooling component(s). Condensers of the temperature regulation systems 212 can be air-cooled, dry-cooled, water-cooled, cooled by one or more cooling towers of the temperature regulation systems 212, or a hybrid cooling arrangement of two or more of these types. Examples of types of components that can be included, in various combinations, in different temperature regulation systems include, for example, compressors, condensers, regulators, heat exchangers, ductwork and fluid lines, combustion chambers, boilers, and air handlers. These components can be drawn from one or more suppliers, e.g., from an entity that is operating or providing the system 200 and/or from a third-party company.

The simulation model 206 includes one or more machine learning models that have been trained to receive, as input, data characterizing a temperature regulation system and a thermal load profile, and to output, based on the input, predicted energy consumption associated with regulating the thermal load profile using the temperature regulation system. Based on its physics-based training, the simulation model 206 can provide accurate and reliable predicted energy consumptions. In some implementations, the simulation model 206 is configured to further receive, as input, weather conditions (e.g., ambient temperature).

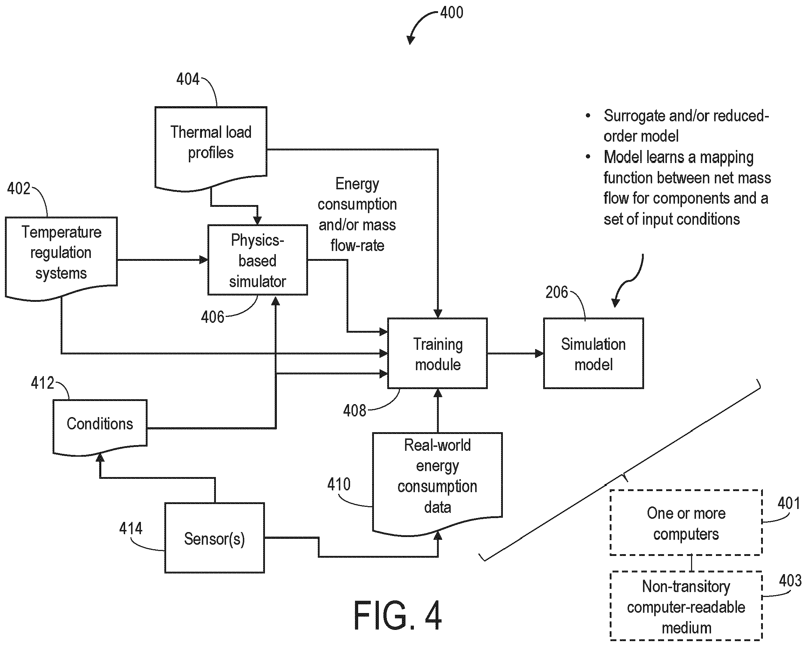

As shown in FIG. 4, the simulation model 206 can be trained based on thermodynamics data using a training system 400. The training system 400 can include one or more computers 401 (e.g., a data processing apparatus) and a non-transitory computer-readable medium 403 tangibly encoding a computer program operable to cause the one or more computers 401 to train and/or retrain the simulation model 206, e.g., by performing physics-based simulations and/or otherwise obtaining training data. The one or more computers 401 and/or the non-transitory computer-readable medium 403 can implement at least some of the modules of FIG. 4. In some implementations, the training system 400 is a remote computer system, such as a cloud computing system. The training system 400 can be, or can include at least some computing elements in common with, the system 200, or can be distinct from the system 200.

As shown in FIG. 4, training data is provided to a training module 408 configured to train the simulation model 206. In some implementations, the training data includes outputs of physics-based thermodynamic simulations. For example, a physics-based simulator (simulation module) 406 can perform physics-based simulations of the regulation of thermal load profiles 404 by temperature regulation systems 402, to determine energy consumptions and/or mass flow-rates associated with regulation of the thermal load profiles 404 using the temperature regulation systems 402. The physics-based simulations can include solving a series of energy and mass balance equations (e.g., differential equations) across different individual components of the temperature regulation systems 402 in a thermodynamic cycle to simulate the underlying physics, for example, to calculate enthalpy/net energy values. In some implementations, the simulations are performed subject to one or more conditions 412, e.g., weather conditions such as temperature, which can affect the outcomes of the simulations by altering the underlying thermodynamics.

The training module 408 trains the simulation model 206 using, as training data, (i) the temperature regulation systems 402 (e.g., characteristics thereof) and the thermal load profiles 404 and (ii) as ground-truth labels for the temperature regulation systems 402 and thermal load profiles 404, the energy consumptions and/or mass flow-rates determined by the physics-based simulator 406. As a result, the simulation model 206 is trained to receive, as input, temperature regulation systems and thermal load profiles, and to provide, as output, corresponding energy consumptions. In some implementations, the training data further includes the conditions 412, such that the simulation model 206 is trained to receive conditions (e.g., the weather conditions of FIG. 2) as input.

During training, parameters (such as weights, hyperparameters, coefficients, and/or the like) of the simulation model 206 can be adjusted to decrease/minimize a value of a loss function based on differences between (i) estimated energy consumptions that are output by the simulation model 206 during training, and (ii) the energy consumptions obtained by physics-based simulation, e.g., using a gradient descent approach or another suitable training method. As a result, the simulation model 206 can accurately embed/represent the underlying physics without having to perform low-level physics simulations for execution. The physics-based simulations performed by the physics-based simulator 406 may be computationally intensive, e.g., such that they would be impractical to perform in real time during a user-friendly temperature regulation system optimization process. However, in some implementations, the simulation model 206 can be executed with fewer computational resources (e.g., processing resources) and/or more quickly for the same amount of computational resources, rendering the optimization processes discussed herein practical and reducing the computational latency of estimating energy consumption. In some implementations, the simulation model 206 is trained to learn a transfer function/mapping function between net-energy/mass flow across components in thermal regulation systems in a thermodynamic cycle (e.g., power/refrigeration cycle), and corresponding input conditions such as the conditions 412 (for example, temperature at the target location, demographic data for the target location, etc.) and the thermal load profiles 404.

For example, the simulation model 206 can learn (e.g., explicitly and/or implicitly based on learned weights of the simulation model 206) transfer/mapping functions *zₘ* = *f*(*T, E_{C}, Mₜ*) and/or *zₑ* = *f*(*T, E_{c}, Mₜ*), where *zₘ* is an output mass flow-rate (for example, of an operating fluid such as a refrigerant), *zₑ* is an output energy consumption rate, *T* is temperature data for the target location, *E*_{c} is thermal energy load (e.g., in KBTU/h for low and medium temperature compressors in a trans-CO₂ unit), and *Mₜ* is thermal mass for the facility (e.g., based on a size of the facility and/or demography data). In some implementations, *E*_{c} is a derived quantity based on thermal mass load. *zₘ* and *zₑ* can be learned for systems as a whole and/or for individual components within a system. Accordingly, given the components and arrangement of a temperature regulation system, the simulation model 206 can determine the mass flow-rate and energy consumption rate for each component (e.g., low and medium temperature compressors, gas-coolers, fans, etc.) and, based on the determined mass flow-rate and energy consumption rate, determine the output energy consumption data (e.g., overall energy consumption data) and/or mass flow-rate (e.g., overall mass flow-rate) determined in operation 106.

Accordingly, the simulation model 206 can be a surrogate and/or reduced-order model that embeds the simulated physics of the thermodynamic simulations into the weights and/or other parameters of the simulation model 206. The simulation model 206 can then be executed to obtain accurate thermodynamic results (e.g., energy consumption of a given temperature regulation system), at lower computational cost (e.g., with reduced latency and/or using fewer processing resources) than if the low-level thermodynamics were themselves simulated during runtime. For example, in the operation of simulating regulation of the target thermal load profile (106), the regulation can be simulated by executing, in real-time during use of the application or tool being used to perform the process 100, the trained simulation model 206, to obtain energy consumption data that is based on physics-based thermodynamic simulations (e.g., as performed by the physics-based simulator 406), without executing the physics-based thermodynamic simulations in real-time. Rather, for example, the results physics-based thermodynamic simulations are implicitly represented in the trained simulation model 206. While executing the physics-based thermodynamic simulations in real-time may be computationally prohibitive and/or be performed with unacceptable latency, in some implementations, the trained simulation model 206 can be executed with acceptable latency and using relatively few processing resources, such that users can provide inputs, obtain outputs, and, if desired, provide new inputs in a dynamic, real-time process.

The simulation model 206 can include any suitable combination of one or more machine learning models and/or parametric functions, including neural network(s), e.g., convolutional neural networks, recurrent neural networks, feedforward neural networks, perceptron networks, deep neural networks, etc.; machine learning models that implement supervised, semi-supervised, unsupervised, and/or reinforcement learning; classification models; large language models; and regression models. The machine learning models described herein can be configured by one or more approaches, such as back-propagation, gradient boosted trees, decision trees, support vector machines, reinforcement learning, partially observable Markov decision processes (POMDP), and/or table-based approximation, to provide several non-limiting examples. Based on the type of machine learning model, the training can include adjustment of one or more parameters. For example, in the case of a regression-based model, the training can include adjusting one or more coefficients of the regression so as to minimize a loss function such as a least-squares loss function. In the case of a neural network, the training can include adjusting weights, biases, number of epochs, batch size, number of layers, and/or number of nodes in each layer of the neural network, so as to minimize a loss function.

In some implementations, instead of or in addition to using training data from the physics-based simulator, the training module 408 can use real-world training data 410 that includes historical measurements of energy consumption by temperature regulation systems regulating thermal load profiles under various conditions. In some implementations, the real-world training data 410 is used to re-train the simulation model 206. For example, energy consumption data can be measured for a facility that was evaluated in the process 100, and the energy consumption data can be fed-back to the training system 400 to be used as real-world training data 410, to retrain the simulation model 206 and obtain more-accurate future estimations of energy consumption. For example, the energy consumption at the facility can be measured by one or more sensors 414 at the facility (which may be distinct from the system 400). In some implementations, re-training can be based on training data that includes a thermal load and/or a temperature (e.g., time-dependent temperature profile) measured using one or more sensors 410 at the facility. For example, sensor(s) (such as an Internet of Things (IoT) sensor) can directly measure facility temperature and/or refrigerant temperature, based on which the system 400 can determine enthalpy and/or entropy of the refrigerant. In some implementations, this can provide more accurate training than using more general temperature information, such as ZIP code-based temperature data. In some implementations, based on its training using real-world training data 410, the simulation model 206 can provide more-accurate predictions for facilities and/or locations similar to, or the same as, facilities and/or locations represented in the real-world training data 410. For example, if a new temperature regulation system is to be installed in a facility for which real-world training data 410 has been used to train the simulation model 206, the simulation model 206 can implicitly draw upon that facility-specific data to provide accurate recommendations for the new temperature regulation system.

FIG. 6 shows an example of a user interface 600 that, in some implementations, can be provided by the system 200 on a display of a user device, for example, in an Internet browser or mobile application. The user interface 600 displays comparative energy consumption data as estimated by the simulation model 206 for a target thermal load. In this example, the target thermal load is 300 kBTU/h for medium temperature and 200 kBTU/h for low temperature, and the energy consumption is estimated for a target location in ZIP code 02472. The energy consumption is estimated (for different temperature regulation systems, in this example, medium- and low-temperature compressor-based systems and a gas-cooler/condenser for a CO₂ refrigeration system. As shown in FIG. 6, the energy consumption is calculated as a function of time (e.g., on a monthly basis over the course of a year) for the target location. Moreover, energy consumptions by the medium-temperature gas compressor tends to be low during colder months, and energy consumption increases during summer, associated with increased cooling.

Referring again to FIG. 1, of the various different evaluated temperature regulation systems, at least one of the temperature regulation systems is provided based on the energy consumption data, to cause use of the at least one of the temperature regulation systems (108). For example, as shown in FIG. 2, a recommendation module 216 can obtain the energy consumptions output by the simulation model 206 and recommend one or more of the temperature regulation systems 212 (218) based on the energy consumptions. The recommendation 218 can be performed based on one or more criteria and/or conditions. For example, in some implementations, the recommendation module 216 is configured to recommend the system(s) predicted to have the lowest energy consumption over a given period of time (e.g., a year).

In some implementations, the recommendation 218 is based on costs associated with the energy consumption. For example, the recommendation 218 can include the system(s) predicted to have the lowest costs over a given period of time (e.g., a year). For example, a cost module 214 can determine an annual energy cost associated with each of the energy consumptions output by the simulation model 206. The costs can be based on, for example, prices of energy (e.g., electricity) at the location of the facility being evaluated, where the location is determined or provided as described above. In some implementations, in addition to energy prices, the cost module 214 can determine the costs based on temperature regulation system specific-costs such as maintenance costs, consumable replenishment costs, etc., which may differ for different temperature regulation systems. Moreover, in some implementations, the determined cost associated with a temperature regulation system can be based at least on environmental impact factors, such as carbon credits/offsets and/or incentives (e.g., tax incentives for use of particular types of temperature regulation systems or components thereof) for use of one or more components of the temperature regulation system. For example, the determined cost associated with a temperature regulation system can be reduced (e.g., from a value based only on the system's annual energy consumption) if the system utilizes a favored refrigerant, such as CO₂, that allows the operator of the system to claim tax credits, grants, etc. The energy price data, cost adjustments, and/or other cost-related data can be manually entered and/or obtained from the databases 210, for example, from a National Institute of Standards and Technology (NIST) database.

The recommendation 218 can have one or more forms in various implementations. In some implementations, the recommendation 218 is provided as a list of recommended temperature regulation system components, e.g., a list of recommended compressors, condensers, and/or refrigerants (determined, for example, based on energy consumption and/or cost as described above). The recommendation 218 can include, in some implementations, the arrangement of components in the recommended system(s), e.g., a compressor arrangement. In some implementations, the recommendation 218 includes one or more recommended temperature regulation systems and/or components thereof, sorted/divided on the basis of cost tiers. For example, the recommendation 218 can include one or more temperature regulation systems and/or components thereof for a high-cost tier, a medium-cost tier, and/or a low-cost tier, where the higher-cost systems and/or components are predicted (based on outputs of the simulation model 206) to provide higher performance along with higher cost (e.g., based on higher energy consumption). In some implementations, the "performance" of each system and/or component thereof can be obtained from the databases 210, e.g., where components can be associated with different performance values. The different cost tiers can be dependent upon the efficiencies of the compressors, condensers, and/or other components used in the recommended temperature regulation systems.

In some implementations, the process 100 is performed in an iterative manner. For example, a space of temperature regulation systems can be searched using one or more suitable search/optimization methods to identify the temperature regulation system(s) that provide lowest costs, lowest energy consumptions, highest performance, or a balance of these and/or other objectives. For example, a first temperature regulation system 212 can be analyzed using the simulation model 206 and, based on the output energy consumption, the first temperature regulation system 212 can be modified in one or more ways to obtain a second temperature regulation system 212 that is then analyzed by the simulation model 206, e.g., with the objective of the second temperature regulation system 212 having a lower energy consumption than the first temperature regulation system 212, for the target thermal load profile. Over multiple iterations, the system 200 can converge onto one or more temperature regulation systems, and/or components/features thereof, that are recommended as recommendation 218. The modification can be based on any suitable method such as a gradient descent method, a directed search, a pruned search, or random sampling. The iteration/optimization can seek to minimize one or more variables, such as energy consumption and/or cost, in some cases subject to one or more constraints such as a required minimum performance. In some implementations, the constraints include compliance with incentive programs (e.g., tax incentive programs for use of particular types of temperature regulation systems or components thereof) and/or compliance with goals such as social causes (e.g., reduction in emissions associated with different types of temperature regulation systems or components thereof).

In some implementations, process 100 (e.g., whether iterative or non-iterative) is performed on a filtered set of temperature regulation systems 212. Based on this pre-filtering, the search space for optimization can be narrowed, and the process 100 can be performed more rapidly and/or using fewer computational resources.

For example, from a full space of temperature regulation systems 212, a filtering module 220 of the system 200 can select a strict subset of the temperature regulation systems 212 that satisfy one or more conditions associated with the facility being evaluated, the target thermal load, the location, and/or another parameter of the process 100. For example, in some implementations, the filtering module 220 can access historical data of previously-implemented temperature regulation systems and select, for evaluation, temperature regulation systems that match and/or are similar to previously-implemented temperature regulation systems. In some implementations, the filtering module 220 can select, for evaluation, temperature regulation systems that match and/or are similar to previously-implemented temperature regulation systems that performed well (e.g., had low costs and/or high performance metrics) in a similar facility to the facility being evaluated, in a similar location to the location of the facility being evaluated, under similar weather conditions to the weather conditions being evaluated, and/or with a similar thermal load to the target thermal load. In some implementations, filtering can be performed based on regulations in the location of the facility being evaluated that may dictate certain aspect(s) of the temperature regulation system. In some implementations, filtering can be performed based on known capabilities of certain components/features to regulate the target thermal load. In some implementations, instead or additionally, filtering can be performed based on a user input. For example, a user can input that they would like to consider only systems that include a certain type of compressor or condenser, that use a certain type of cooling or refrigerant, etc., to obtain customized recommendations. For example, based on a provided compressor outlet and provided ambient temperatures, the system 200 can recommend suitable condenser configurations.

For example, in some implementations, based on the target thermal load, the filtering module 220 can pre-select one or more components such as compressor, regulator, condenser, or refrigerant (e.g., Hydrofluorocarbon (HFC) or Trans-CO₂, etc.) that are expect to be effective at regulating the target thermal load (e.g., based on data from the databases 210). For example, the filtering module 220 can access a mapping between (i) components and (ii) ranges of compressor power and/or condenser temperature that are compatible with the components, and can pre-select components that are compatible with the power(s) and/or temperature(s) used for regulating the target thermal load profile. The temperature regulation systems 212 evaluated by the simulation model 206 can be systems that include these preselected components, without the need to run an exhaustive computation across all possible sets of components. This reduces the number of permutations of components that need to be analyzed to arrive at the recommendations 218.

In some implementations, the power(s) and/or temperature(s) used for regulating the target thermal load profile fall in an intermediate range between values compatible with particular refrigeration system components. In such scenarios, the filtering module 220 can utilize an interpolation function (e.g., as a function of mass-flow rate and/or power consumption for the target thermal load profile) to filter out refrigeration system component(s) and/or combinations thereof.

In some implementations, in the absence of pre-existing data for a location or facility, the filtering module 220 selects a default set of temperature regulation systems to be evaluated.

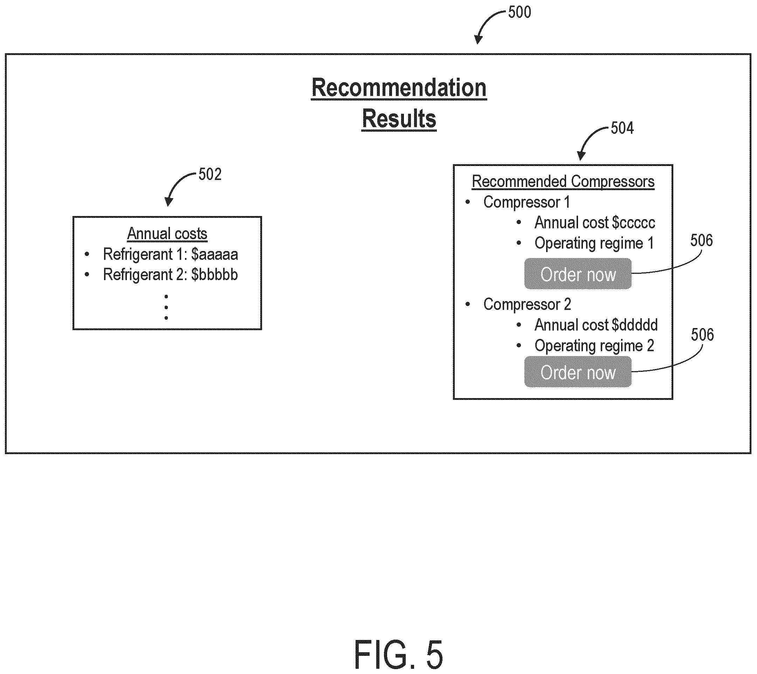

FIG. 5 shows an example of a user interface 500 according to some implementations of this disclosure. The user interface 500 can be provided, for example, in a web browser or in a mobile application. It will be understood that both the form and the contents of the user interface 500 are examples, and that results (e.g., recommendations 218) can be provided in other user interfaces that include other information. The user interface 500 includes estimated annual costs 502 for different operating fluids (in this case, refrigerants) and a list 504 of recommended compressors, including, for each recommended compressor, a corresponding estimated annual cost, an operating regime of the compressor, and an interface element 506 that can be selected in order to place an order for the compressor (or, for example, initiate an ordering process by which the compressor can be purchased). The cost can be an annual energy consumption cost associated with using a temperature regulation system using the component or consumable, or can include (e.g., in addition to the cost of energy) cost(s) associated with replenishment, maintenance, etc. In some implementations, the estimated cost and/or energy consumption is presented as a function of one or more parameters of the evaluated temperature regulation systems, e.g., as a function of different refrigerants. Other interface elements that can be included in some implementations include elements by which users can provide feedback on the recommendations; visualizations of temperature regulation systems, energy consumption, and/or costs at similar facilities to the facility under evaluation; and a dynamic dashboard usable to compare recommendations (e.g., compare components and/or systems against one another). In some implementations, the user interface 500 includes a map showing thermal load profiles (e.g., in J) at multiple facilities distributed across a region.

In some implementations, the systems 200 and/or 400 can be implemented as a tool, application, or other service accessible to users. For example, the system 200 (e.g., a cloud-based system) can provide (e.g., over the Internet) user interfaces by which users can input information for energy consumption determination (e.g., facility location and other information) and through which outputs and recommendations, such as recommendations 218, can be provided. The use of the simulation model 206 can render energy consumption determination computationally feasible with low latency, promoting a user-friendly experience and allowing for optimizations and testing that might otherwise be infeasible. Accordingly, the described systems 200, 400 can be used to model heat regulation in many facilities without necessitating overly-burdensome investment (e.g., computational investment and/or human time investment). As a result, tools, applications, and other services incorporating the systems 200 and/or 400 can be used as tools to promote purchases and other commercial activity. For example, the system 200 can be used as a demonstration tool for prospective customers to help the prospective customers estimate the results of purchasing various temperature regulation systems and components. Based on viewing the recommendations 218, the customers may be more likely to purchase recommended components (e.g., using the interface elements 506).

As noted above, in operation 108, at least one of the temperature regulation systems is provided based on the energy consumption data, to cause use of the at least one of the temperature regulation systems. For example, based on the provision (e.g., recommendation) of a temperature regulation system or a component, the temperature regulation or the component can be shipped to a customer (e.g., a customer who used the system 200 to obtain the recommendation), and the customer can install the temperature regulation system or the component in a facility and use the temperature regulation system or the component to regulate thermal loads at the facility. Because the temperature regulation system or component has been recommended as described herein, temperature regulation can be performed with increased efficiency and effectiveness, and with less energy consumption.

For example, as shown in FIG. 1, in some implementations, the process 100 includes installing the at least one of the different temperature regulation systems at a facility at the target location (110). For example, the facility can be the facility whose thermal regulation was simulated in operation 106. The at least one of the different temperature regulation systems can be a system that was recommended based on the simulation, for example, as having the lowest cost, lowest energy consumption, and/or satisfying one or more other criteria. Once installed, the at least one of the different temperature regulation systems can be operated to regulate temperatures in the facility, e.g., perform refrigeration, heating, etc.

Moreover, in some implementations, the simulation model 206 can be leveraged to improve operations and/or management of an installed temperature regulation system. For example, the simulation model 206 can be used to predict mass flow-rate and/or power consumption for an installed temperature regulation system 222, and the outputs can be provided (e.g., in a user interface of an application or other tool) to provide data on unit performance, preventative maintenance schedules, predicted repairs, etc. In addition, in some implementations, the output mass flow-rate for one or more components of the installed temperature regulation system 222 can be used to manage inventory of consumables (e.g., CO₂ and/or other refrigerants), e.g., to predict a time at which more consumables will be needed for the installed temperature regulation system 222. This may be especially beneficial in the case of facilities lacking easy access to refrigerants and other deliveries.

Some features described herein, such as the systems 200, 400 and elements thereof, may be implemented in digital and/or analog electronic circuitry or in computer hardware, firmware, software, or in combinations of them. Some features may be implemented in a computer program product tangibly embodied in an information carrier, e.g., in a machine-readable storage device, for execution by a programmable processor. Method steps may be performed by a programmable processor executing a program of instructions to perform functions of the described implementations by operating on input data and generating output, by discrete circuitry performing analog and/or digital circuit operations, or by a combination thereof.

Some described features may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., Objective-C, Java, Python, JavaScript, Swift), including compiled or interpreted languages, and it may be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random-access memory or both. The essential elements of a computer are a processor for executing instructions and one or more memories for storing instructions and data. Generally, a computer may communicate with mass storage devices for storing data files. These mass storage devices may include magnetic disks, such as internal hard disks and removable disks; magneto-optical disks; and optical disks. Storage devices suitable for tangibly embodying computer program instructions and data include all forms of non-volatile memory, including by way of example, semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits). To provide for interaction with a user the features may be implemented on a computer having a display device such as a CRT (cathode ray tube), LED (light emitting diode) or LCD (liquid crystal display) display or monitor for displaying information to a user, a keyboard and a pointing device, such as a mouse or a trackball by which the user may provide input to the computer.

A number of implementations have been described. Nevertheless, it will be understood that various modifications may be made. Elements of one or more implementations may be combined, deleted, modified, or supplemented to form further implementations. In yet another example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following further examples and claims.

Further examples:
1. A system comprising:
   one or more processors; and
   one or more computer-readable mediums encoding instructions that, when executed by the one or more processors, cause the one or more processors to
      obtain a target thermal load profile and a target location,
      determine weather conditions associated with the target location,
      simulate regulation of the target thermal load profile by different temperature regulation systems having different corresponding sets of components, subject to the weather conditions, to obtain energy consumption data for each of the different temperature regulation systems, and
      provide at least one of the different temperature regulation systems based on the energy consumption data, to cause use of the at least one of the different temperature regulation systems having the corresponding set of components.
2. The system of example 1, wherein simulating the regulation of the target thermal load profile comprises processing the target thermal load profile using a machine learning model that has been trained to output the energy consumption data for each of the different temperature regulation systems.
3. The system of example 2, wherein the machine learning model has been trained using, as training data, outputs of physics-based thermodynamic simulations.
4. The system of example 3, wherein the machine learning model comprises a surrogate model or a reduced-order model that embeds the outputs of the physics-based thermodynamic simulations.
5. The system of example 3, wherein the machine learning model has been trained to learn a transfer function between mass flow-rate for components of the temperature regulation systems and a set of input conditions.
6. The system of example 2, wherein the machine learning model has been trained using:
   as input data, data indicative of the different temperature regulation systems, and
   as labels of the input data, historical energy consumption data.
7. The system of example 6, wherein the instructions cause the one or more processors to
   obtain measured energy consumption data for regulation of the target thermal load profile by one of the at least one of the different temperature regulation systems, and
   retrain the machine learning model using the measured energy consumption data.
8. The system of example 6, wherein the historical energy consumption data is measured at a facility having the target thermal load profile.
9. The system of example 1, wherein the corresponding sets of components comprise at least one of compressors, condensers, or refrigerants.
10. The system of example 1, wherein the energy consumption data comprises an amount of energy consumption as a function of different refrigerants.
11. The system of example 1, wherein the instructions cause the one or more processors to simulate regulation of the target thermal load profile as a function of time over multiple different times within a day.
12. The system of example 1, wherein the different temperature regulation systems have different arrangements of the corresponding sets of components, and
   wherein the instructions cause the one or more processors to provide the at least one of the different temperature regulation systems by causing the one or more processors to provide a particular arrangement of the different arrangements.
13. The system of example 12, wherein the different arrangements comprise at least one of a series arrangement of compressors or a parallel arrangement of compressors.
14. The system of example 1, wherein the target thermal load profile comprises a facility cooling profile.
15. The system of example 1, wherein the instructions cause the one or more processors to obtain the target thermal load profile by determining the target thermal load profile based on one or more parameters associated with the target location,
   wherein the one or more parameters comprise at least one of demographic data of the target location or data characterizing a facility at the target location.
16. The system of example 1, wherein the instructions cause the one or more processors to provide the at least one of the different temperature regulation systems by:
   determining a simulated cost associated with each of the different temperature regulation systems, based on the energy consumption data; and
   selecting the at least one of the different temperature regulation systems as a subset of the different temperature regulation systems having the lowest costs among the simulated costs.
17. The system of example 1, wherein the instructions cause the one or more processors to determine the corresponding sets of components based on the target thermal load profile.
18. The system of example 1, wherein obtaining the target thermal load comprises:
   obtaining demographic information for the target location;
   determining a customer base for a facility in which the target thermal load is to be regulated, based on the demographic information and facility information characterizing the facility;
   determining a peak population at the facility based on the customer base and the facility information; and
   determining the target thermal load based on the peak population and a size of the facility.
19. A method comprising:
   obtaining a target thermal load profile and a target location of a facility;
   determining weather conditions associated with the target location;
   simulating regulation of the target thermal load profile by different temperature regulation systems having different corresponding sets of components, subject to the weather conditions, to obtain energy consumption data for each of the different temperature regulation systems; and
   installing a first temperature regulation system of the different temperature regulation systems at the facility based on the energy consumption data.
20. The method of example 19, wherein simulating the regulation of the target thermal load profile is performed using a trained machine learning model, and
   wherein the trained machine learning model has been trained using, as training data, outputs of physics-based thermodynamic simulations, such that the simulation machine learning model embeds the thermodynamic simulations as a surrogate model or a reduced-order model.
21. The method of example 20, comprising:
   obtaining measured energy consumption data for temperature regulation by the first temperature regulation systems at the facility; and
   retraining the trained machine learning model using the measured energy consumption data.
22. The method of example 20, comprising regulating temperatures at the facility using the installed first temperature regulation system.
23. The method of example 20, wherein the corresponding sets of components comprise at least one of compressors, condensers, or refrigerants.
24. The method of example 20, wherein the trained machine learning model has been trained using:
   as input data, data indicative of the different temperature regulation systems, and
   as labels of the input data, historical energy consumption data.
25. The method of example 20, wherein the trained machine learning model has been trained to learn a transfer function between mass flow-rate for components of the temperature regulation systems and a set of input conditions.

## Claims

1. A non-transitory computer-readable medium tangibly encoding a computer program operable to cause a data processing apparatus to perform operations comprising:
obtaining a target thermal load profile and a target location;
determining weather conditions associated with the target location;
simulating, using a trained machine learning model, regulation of the target thermal load profile by different temperature regulation systems having different corresponding sets of components, subject to the weather conditions, to obtain energy consumption data for each of the different temperature regulation systems,
wherein the trained machine learning model has been trained using, as training data, outputs of physics-based thermodynamic simulations, such that the simulation machine learning model embeds the thermodynamic simulations as a surrogate model or a reduced-order model; and
providing at least one of the different temperature regulation systems based on the energy consumption data, to cause use of the at least one of the different temperature regulation systems having the corresponding set of components.

2. The non-transitory computer-readable medium of claim 1, wherein the trained machine learning model has been trained to learn a transfer function between mass flow-rate for components of the temperature regulation systems and a set of input conditions.

3. The non-transitory computer-readable medium of any one of claims 1-2, wherein the machine learning model has been trained using:
as input data, data indicative of the different temperature regulation systems, and
as labels of the input data, historical energy consumption data,
and optionally wherein the historical energy consumption data is measured at a facility having the target thermal load profile.

4. The non-transitory computer-readable medium of any one of claims 1-3, wherein the instructions cause the data processing apparatus to:
obtain measured energy consumption data for regulation of the target thermal load profile by one of the at least one of the different temperature regulation systems, and
retrain the machine learning model using the measured energy consumption data.

5. The non-transitory computer-readable medium of any one of claims 1-4, wherein the corresponding sets of components comprise at least one of compressors, condensers, or refrigerants.

6. The non-transitory computer-readable medium of any one of claims 1-5, wherein the different temperature regulation systems have different arrangements of the corresponding sets of components, and
wherein the instructions cause the one or more processors to provide the at least one of the different temperature regulation systems by causing the one or more processors to provide a particular arrangement of the different arrangements,
and optionally wherein the different arrangements comprise at least one of a series arrangement of compressors or a parallel arrangement of compressors.

7. A system comprising:
one or more processors; and
the non-transitory computer-readable medium of any one of claims 1-6.

8. A method comprising:
obtaining a target thermal load profile and a target location of a facility;
determining weather conditions associated with the target location;
simulating regulation of the target thermal load profile by different temperature regulation systems having different corresponding sets of components, subject to the weather conditions, to obtain energy consumption data for each of the different temperature regulation systems; and
installing a first temperature regulation system of the different temperature regulation systems at the facility based on the energy consumption data.

9. The method of claim 8, wherein simulating the regulation of the target thermal load profile is performed using a trained machine learning model, and
wherein the trained machine learning model has been trained using, as training data, outputs of physics-based thermodynamic simulations, such that the simulation machine learning model embeds the thermodynamic simulations as a surrogate model or a reduced-order model.

10. The method of claim 9, comprising:
obtaining measured energy consumption data for temperature regulation by the first temperature regulation systems at the facility; and
retraining the trained machine learning model using the measured energy consumption data.

11. The method of any one of claims 9-10, wherein the trained machine learning model has been trained using:
as input data, data indicative of the different temperature regulation systems, and
as labels of the input data, historical energy consumption data,
and optionally wherein the historical energy consumption data is measured at a facility having the target thermal load profile.

12. The method of any one of claims 9-11, wherein the trained machine learning model has been trained to learn a transfer function between mass flow-rate for components of the temperature regulation systems and a set of input conditions

13. The method of any one of claims 8-12, comprising regulating temperatures at the facility using the installed first temperature regulation system.

14. The method of any one of claims 8-13, wherein the corresponding sets of components comprise at least one of compressors, condensers, or refrigerants.

15. The method of any one of claims 8-14, wherein the different temperature regulation systems have different arrangements of the corresponding sets of components, and
wherein installing the first temperature regulation system comprises installing the first temperature regulation system with an arrangement of components that has been simulated using the trained machine learning model,
and optionally wherein the different arrangements comprise at least one of a series arrangement of compressors or a parallel arrangement of compressors.
